# FASCICULE DE BREVET EUROPEEN

(11) **EP 2 942 237 B1**
(45) Date de publication et mention de la délivrance du brevet: **18.10.2017**
(21) Numéro de dépôt: 15165290.6
(22) Date de dépôt: 27.04.2015
(51) Int. Cl.: B60R 9/045

(54) **DISPOSITIF D'ANCRAGE D'UNE EXTRÉMITÉ DE BARRE DE TOIT POUR UN VÉHICULE AUTOMOBILE EQUIPE DE BARRES DE TOIT LONGITUDINALES**
VORRICHTUNG ZUR VERANKERUNG EINER EXTREMITÄT EINER DACHRELING FÜR EIN KRAFTFAHRZEUG, DAS MIT LÄNGS-DACHRELINGEN AUSGESTATTET IST
DEVICE FOR ANCHORING A ROOF BAR END FOR A MOTOR VEHICLE PROVIDED WITH LONGITUDINAL ROOF BARS

(30) Priorité: 05.05.2014 FR 1454054
(43) Date de publication de la demande: 11.11.2015
(73) Titulaire: PSA Automobiles SA, 78300 Poissy (FR); Mont Blanc Industri AB, 516 90 Dalsjöfors (SE)
(72) Inventeur: Barbier, Emmanuel, 91160 SAULX LES CHARTREUX (FR); Sternving, Bjorn, 51335 FRISTAD (SE); Ekman, Daniel, 50445 BORAS (SE)

(56) Documents cités:
- EP-A1- 2 216 204
- WO-A1-2008/140379
- WO-A1-2011/102780

## Description

L'invention concerne les dispositifs permettant d'ancrer une extrémité d'une barre de toit (ou barre transversale) sur une barre longitudinale solidarisée à une partie latérale supérieure d'une structure de véhicule automobile.

Elle concerne également une barre de toit transversale et une barre longitudinale mettant en oeuvre ledit dispositif d'ancrage.

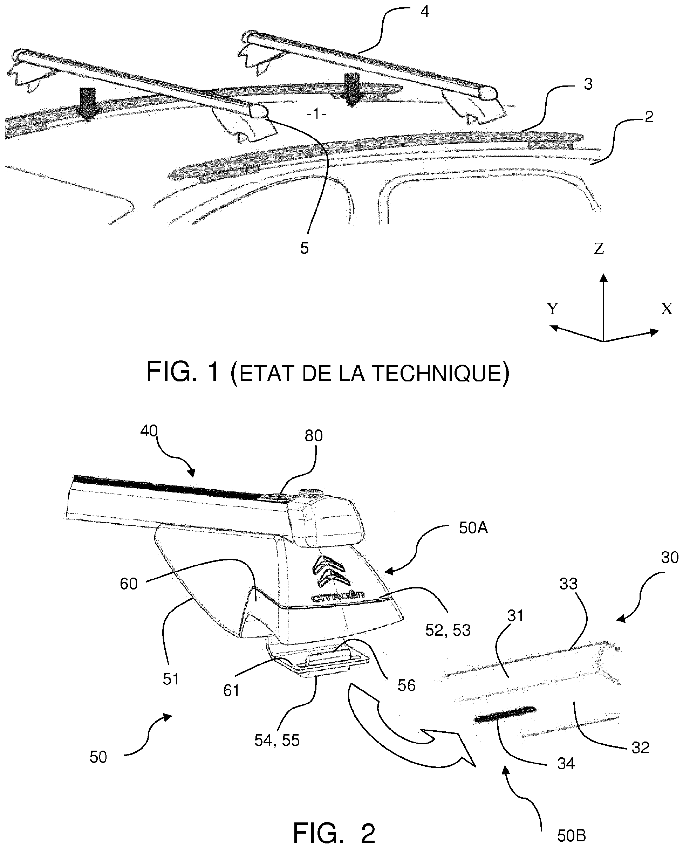

On entend ici par « partie latérale supérieure d'une structure de véhicule automobile » la partie de structure qui délimite la partie latérale du toit (ou pavillon) sur l'un des deux côtés latéraux (ou longitudinaux) d'un véhicule automobile et qui se trouve située au niveau de la partie supérieure d'une portière latérale (voir figure 1).

Comme le sait l'homme de l'art, et comme illustré sur la figure 1, certains véhicules automobiles 1 comportent une structure dont les deux parties latérales supérieures opposées 2 sont équipées d'une barre longitudinale 3. Chaque barre longitudinale 3 présente généralement une section transversale de forme variée et est solidarisée à l'une des deux parties latérales supérieures 3 par soudage ou vissage.

Les barres de toit 4 sont des accessoires qui sont aptes à être rapportés entre les deux barres longitudinales 3 et fixés sur ces barres via des dispositifs d'ancrage 5 qui doivent généralement être préalablement montés sur les extrémités des barres de toit.

Les barres de toit 4 sont utilisées pour supporter différents types d'objet tels qu'un coffre de toit, des supports de vélo de surf, de skis, etc.

Elles doivent répondre à certaines normes de sécurité quant à leur résistance mécanique : poids maximal admissible, résistance à l'arrachement, aux chocs, ...

On connaît notamment du document CN202669658U un agencement de barres de toit fixées sur des barres longitudinales.

Selon cet agencement, le dispositif comporte, sur l'extrémité libre de la barre de toit, une mâchoire fixe et une mâchoire mobile disposée en regard de la partie fixe en étant mobile en translation par rapport à la partie fixe, les mâchoires étant aptes à enserrer au moins partiellement une section de la barre longitudinale, et des moyens de serrage des mâchoires sur la barre longitudinale. Toujours selon cet agencement, les barres transversales peuvent être disposées suivant différentes configurations le long des barres longitudinales.

Le blocage en position est assuré par simple pincement de la barre longitudinale entre les deux mâchoires.

Ce dispositif ne garantit pas une tenue aux chocs et à l'arrachement optimale conforme aux normes en vigueur.

Il est connu du document EP2216204A1 un dispositif d'ancrage conforme au préambule de la revendication 1.

L'invention a pour but d'offrir un dispositif d'ancrage destiné à fixer de manière robuste, une extrémité de barre de toit sur une barre longitudinale solidarisée à une partie latérale supérieure d'une structure de véhicule automobile.

Elle propose à cet effet un dispositif d'ancrage d'une extrémité de barre de toit sur une barre longitudinale solidarisée à une partie latérale supérieure d'une partie de structure de véhicule sensiblement parallèle à une direction longitudinale de ce dernier conforme à la partie caractérisante de la revendication 1.

Selon une caractéristique du premier mode de réalisation, les moyens de serrage comportent une vis dont la tête est en butée sur la barre de toit et dont la partie filetée coopère avec un moyen formant écrou couplé en rotation avec le levier.

Selon un deuxième mode de réalisation, le corps supporte à translation un mors définissant la mâchoire mobile et dont le déplacement se fait à translation dans le corps sous l'effet des moyens de serrage.

Selon une caractéristique commune aux premier et deuxième modes de réalisation, la section transversale de la barre longitudinale est délimitée par un bord intérieur plan, se prolongeant par un bord inférieur adjacent plan, et un bord supérieur partiellement convexe reliant le bord inférieur au bord intérieur.

Selon une autre caractéristique, la surface d'appui du premier bec est conformée pour être apte à épouser au moins partiellement le bord intérieur et le bord supérieur de la barre longitudinale, et en ce que le second bec est conformé pour être apte à épouser au moins partiellement le bord inférieur de la barre longitudinale ; la partie extrême du second bec étant recourbée pour être apte à coopérer avec une butée ménagée dans le bord inférieur de la barre longitudinale.

Selon une caractéristique, la butée définit un lamage de forme générale rectangulaire dont la grande dimension s'étend suivant la direction longitudinale, centré sur le bord inférieur de la barre longitudinale.

L'invention propose également une barre de toit comportant une ouverture d'accès pour les moyens de serrage du dispositif d'ancrage selon tel que décrit ci-dessus.

L'invention propose également une barre longitudinale apte à être solidarisée à une partie latérale supérieure d'une partie de structure de véhicule, sensiblement parallèle à une direction longitudinale de ce dernier, comportant une butée conforme à celle des seconds moyens d'ancrage du dispositif d'ancrage tel que décrit ci-dessus.

L'invention propose également un corps apte à être solidarisé sur l'extrémité d'une barre de toit tel que décrite ci-dessus, ledit corps appartenant aux premiers moyens d'ancrage du dispositif d'ancrage tel que décrit ci-dessus.

L'invention propose également un véhicule automobile comportant au moins une paire de barres longitudinales telles que décrites ci-dessus, au moins une barre de toit tel que décrit ci-dessus et un dispositif d'ancrage tel que décrit ci-dessus.

L'invention propose enfin, un procédé d'assemblage d'une barre de toit telle que décrite ci-dessus, sur une barre longitudinale telle que décrite ci-dessus mettant en oeuvre le dispositif d'ancrage tel que décrit ci-dessus, caractérisé en ce qu'il consiste :
- à amener en butée, le premier bec contre un bord intérieur de la barre longitudinale ; le second bec passant sous son bord inférieur ;
- à actionner les moyens de serrage pour amener progressivement le second bec contre le bord inférieur de la barre de toit ; la partie recourbée du second bec pénétrant progressivement à l'intérieur du lamage ménagé dans le bord inférieur de la barre longitudinale jusqu'au blocage complet de l'assemblage.

D'autres caractéristiques et avantages de l'invention apparaîtront à l'examen de la description détaillée ci-après, et des dessins annexés, sur lesquels :
- la figure 1, déjà décrite, illustre partiellement un toit d'un véhicule automobile équipé de barres longitudinales recevant une paire de barres de toit selon l'état de la technique ;
- la figure 2 illustre, selon une vue d'ensemble en perspective, un dispositif d'ancrage selon l'invention, avant solidarisation d'une barre de toit avec une barre longitudinale ;
- la figure 3 illustre, dans une vue en coupe transversale, une partie du dispositif d'ancrage selon l'invention dans une première position extrême ;
- la figure 4 illustre, dans une vue en coupe transversale, la même partie du dispositif d'ancrage selon l'invention dans une deuxième position extrême ;
- la figure 5 illustre, dans une vue en coupe transversale, le dispositif d'ancrage complet selon l'invention, dans la deuxième position extrême correspondant à la position dans laquelle l'ancrage de la barre de toit sur la barre longitudinale est assuré ; et
- la figure 6 illustre, par une vue en perspective, l'étape de serrage du procédé d'assemblage selon l'invention.

Sur les figures, les mêmes éléments sont désignés par les mêmes références numériques.

Les dessins des figures sont orientés suivant un référentiel orthonormé XYZ généralement utilisé dans le domaine de l'automobile pour repérer le véhicule ou des parties du véhicule dans l'espace.

Dans ce qui suit, on considère, à titre d'exemple non limitatif, que le véhicule automobile est une voiture (éventuellement de type coupé). Mais, l'invention n'est pas limitée à ce type de véhicule automobile. Elle concerne en effet tout type de véhicule automobile comportant un toit délimité au niveau de chacune de ses parties latérales opposées par une partie latérale supérieure de structure à laquelle est solidarisée de manière robuste une paire de barres longitudinales.

Par ailleurs, dans ce qui suit, on appellera « direction longitudinale X » la direction qui est sensiblement parallèle aux portières latérales du véhicule et donc aux parties latérales supérieures de la structure, « direction transversale Y » la direction qui est sensiblement perpendiculaire aux portières latérales du véhicule et donc à la direction longitudinale X, et « direction verticale Z » la direction qui est sensiblement perpendiculaire aux directions longitudinale X et transversale Y.

La description de la section transversale d'une barre longitudinale 30 selon l'invention est donnée ci-dessous telle que positionnée sur le toit du véhicule 1. Les termes « intérieur », « extérieur », « supérieur » et « inférieur » sont donc à comprendre dans cet environnement.

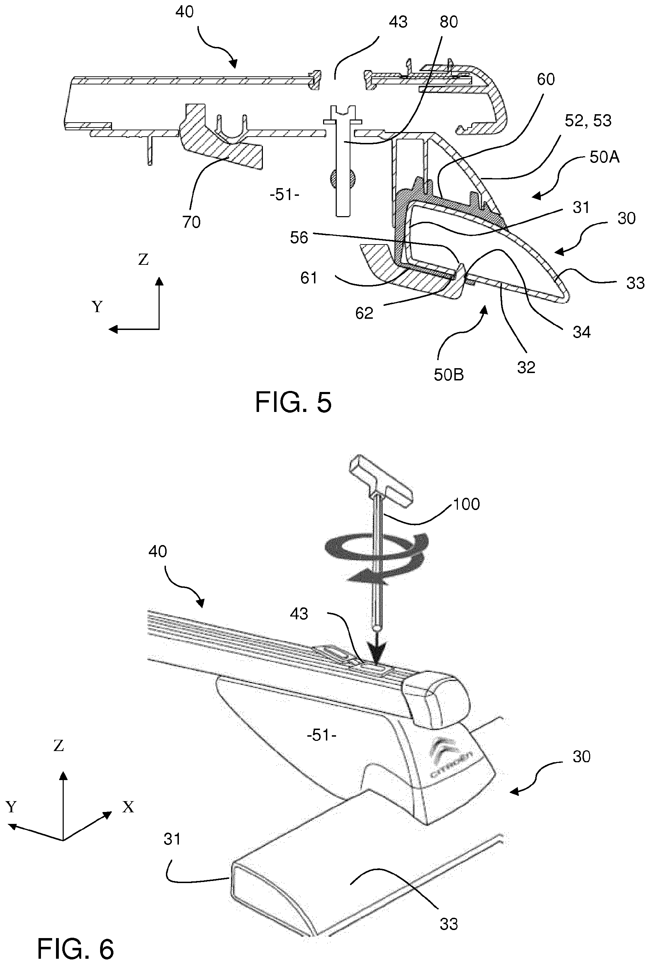

La section transversale de la barre longitudinale 30, visible sur les figures 2, 5 et 6, est délimitée par un bord intérieur 31 sensiblement plat et vertical, se prolongeant par un bord inférieur 32 plat adjacent, s'étendant par rapport au bord intérieur vertical 31 vers l'extérieur du véhicule 1 avec un angle compris entre 90° et 110°, typiquement 105°, par rapport au bord intérieur vertical 31, et un bord supérieur 33 reliant le bord inférieur 32 au bord intérieur 31. Ce bord 33 est d'abord convexe, à l'opposé du bord intérieur 31, puis devient progressivement parallèle au bord inférieur 32 en se rapprochant du bord intérieur 31 à la manière d'un profil dit « en aile d'avion ».

L'assemblage de la barre de toit 40 avec la barre longitudinale 30 est réalisé par un dispositif d'ancrage 50 selon l'invention qui comporte des premier et second moyens d'ancrage 50A, 50B respectivement répartis sur la barre de toit 40 et sur la barre longitudinale 30.

De manière connue, le corps principal 51 des premiers moyens d'ancrage 50A du dispositif d'ancrage 50 selon l'invention est monté à translation sur un rail de guidage 41 ménagé sur la face intérieure de l'extrémité de la barre de toit 40. Ce rail 41, de longueur déterminée et ouvert vers l'extérieur de la barre 40, permet d'ajuster les premiers moyens d'ancrage 50A à l'écartement entre les deux barres longitudinales 30.

La partie extérieure du corps principal 51, suivant Y, (à droite sur les figures) définit une mâchoire fixe 52 dont l'extrémité libre est conformée en un premier bec 53, pour être apte à épouser au moins partiellement le bord intérieur vertical 31 et le bord supérieur 33 de la barre longitudinale 30.

Le corps principal 51 supporte à rotation une mâchoire mobile 54 dont l'extrémité libre est conformée pour définir un second bec 55, venant en regard du premier bec 53.

La mâchoire mobile 54 est de préférence métallique pour pouvoir supporter les contraintes mécaniques, notamment d'arrachement et de choc.

La partie extrême du second bec 55 est recourbée en forme de crochet 56 de manière à être apte à coopérer avec les seconds moyens d'ancrage 50B disposés sous la barre longitudinale 30.

Ces seconds moyens d'ancrage 50B selon l'invention sont matérialisés par une ouverture 34 ménagée dans le bord inférieur 32 de la barre longitudinale 30 comportant au moins deux butées longitudinales et au moins deux butées transversales aptes à assurer le blocage en X et en Y de la barre de toit 40 sur la barre longitudinale 30.

Dans le mode de réalisation décrit, l'ouverture 34 définit un lamage de forme générale rectangulaire, ou oblongue, dont la grande dimension s'étend suivant la direction longitudinale X, en étant centré sur le bord inférieur 32 de la barre longitudinale 30. Les bords du lamage 34 définissent des butées pour la partie recourbée 56 du second bec 55.

A titre de variante, non représentée, l'ouverture peut être remplacée par au moins une excroissance venue de matière avec le bord inférieur 32 de la barre longitudinale 30 pour définir une butée en X, faisant saillie sous le bord inférieur 32 de la barre longitudinale 30.

Une pièce en matériau souple 60, de type caoutchouc, est rapportée à l'intérieur du premier bec 53 pour protéger la barre longitudinale 30 et absorber les vibrations.

Cette pièce 60 se prolonge en dehors du second bec 55, vers le bas, selon Z, en direction de l'extrémité du second bec 55, pour définir une languette plate 61 de plus grande largeur que celle de l'extrémité du second bec 55.

La longueur de la languette 61 est déterminée pour pourvoir s'interposer entre le second bec 55 et le bord inférieur 32 de la barre longitudinale 30 quand la barre de toit 40 est assemblée sur la barre longitudinale 30.

Dans le mode de réalisation décrit, l'extrémité libre de la languette 61 est munie d'une ouverture 62 de forme générale rectangulaire ou oblongue, apte à être disposée en regard du lamage 34 de la barre longitudinale 30 et à être traversée de part en part par la partie recourbée 56 du second bec 55, au moment du serrage de la mâchoire mobile 54 contre la barre longitudinale 30.

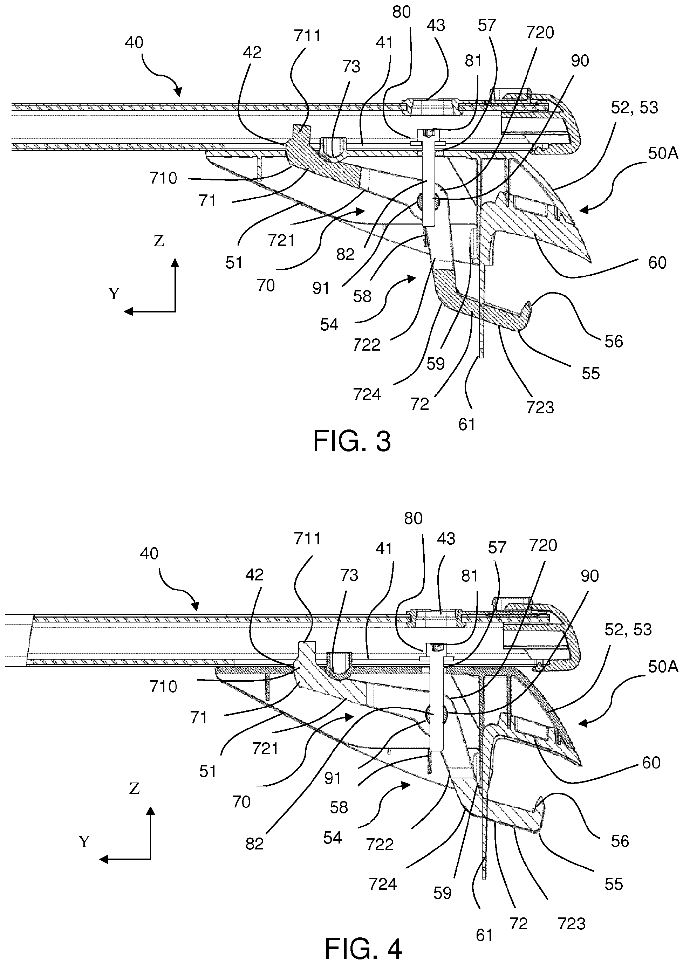

Un mécanisme de serrage de mâchoire mobile 54 est décrit ci-après en référence aux figures 3 à 6.

Selon l'invention, la partie de mâchoire mobile 54 comporte un levier 70, s'étendant à l'intérieur du corps 51 dans le plan YZ, dont les deux bras de levier 71 et 72 s'étendent selon deux directions opposées selon Y, de part et d'autre d'un point d'appui fixe 73 matérialisé par une protubérance faisant saillie à l'intérieur de la partie supérieure du corps 51.

Le premier bras, court, 71 est disposé à gauche du point d'appui fixe 73 et le deuxième bras, long, 72 se terminant par le second bec 55 à partie extrême recourbée 56, est disposé à droite du point d'appui fixe 73, en se référant à l'orientation des figures 3 à 6.

Le deuxième bras 72 comporte, en partant du point d'appui fixe 73, un premier tronçon 721 s'étendant selon une première direction s'écartant sensiblement d'un angle d'environ 10°, de la direction horizontale selon Y, vers la partie inférieur du corps 51. Le premier tronçon 721 se prolonge par un deuxième tronçon 722 de même longueur, via une première partie coudée 720, en s'étendant selon une deuxième direction s'écartant sensiblement d'un angle d'environ 10° de la direction verticale selon Z, vers la partie extérieure du corps 51 (vers la droite sur les figures). Le deuxième tronçon 722 se prolonge par un troisième tronçon 723 s'étendant selon la même première direction, via une deuxième partie coudée 724, avec le même angle par rapport à la direction horizontale selon Y, vers la partie inférieur du corps 51. Le troisième tronçon 723 fait saillie de la partie inférieure du corps 51 et définit le second bec 55, apte à venir en contact avec le bord inférieur 32 de la barre longitudinale 30.

L'extrémité libre 710 du premier bras de levier 71 fait quant à elle saillie de la partie supérieure du corps 51, au travers d'une ouverture 42 managée à proximité du point d'appui fixe 73 (à gauche du point d'appui fixe 73 sur les figures). Cette ouverture 42 permet de caler le levier 70 selon les directions X et Y.

Le levier 70 (et donc la mâchoire mobile 54) est maintenu suspendu dans le corps 51 par une vis 80 traversant de part en part une ouverture 57 ménagée dans la paroi supérieure du corps 51, en regard de la première partie coudée 720 du deuxième bras de levier 72.

La tête de vis 81, de type hexagonale creuse ou à empreinte Torx (la vis Torx est une solution pour limiter le risque de vol), prend appui sur le rail de guidage 41 et sa partie filetée 82 traverse l'ouverture 57 ménagée dans la paroi supérieure du corps 51. L'extrémité inférieure de la partie filetée 82 de la vis 80 coopère avec un trou taraudé 90 d'axe vertical selon Z, formant écrou, ménagé dans une tige cylindrique 91 de section circulaire s'étendant selon X. La tige 91 est montée à rotation dans la première partie coudée 720 du deuxième bras 72 pour former une liaison pivot.

L'ensemble constitué de la partie filetée 82 et de la tige-écrou 90-91 forme un système de vis sans fin (liaison hélicoïdale) et la liaison mécanique entre la tige 90 et le deuxième bras 72 forme une liaison de type pivot. La combinaison des liaisons mécaniques hélicoïdale et pivot définit un deuxième point d'appui pour le levier 70.

Le serrage de la vis 80 entraine le deuxième bras de levier 72 vers le haut suivant Z, lequel pivote autour du premier point d'appui 73 selon le sens anti horaire ; le pivotement étant autorisé par la liaison pivot.

La tête de vis 81 est accessible par une ouverture 43 ménagée dans la face supérieure de la barre de toit 40, en regard de la tête de vis 80. Les dimensions de l'ouverture 43 sont déterminées pour tenir compte du débattement en X du corps 51 du dispositif d'ancrage sur le rail 41 de la barre de toit 40.

Le débattement en rotation du deuxième bras de levier 72 est limité, dans la partie inférieure du corps 51, par deux parois ou nervures verticales 58 et 59, venues de matière avec le corps 51 pour définir respectivement deux butées de débattement pour le deuxième tronçon 722 du deuxième bras de levier 72.

Quand le premier bec 53 est positionné sur les bords intérieur 31 et supérieur 33 de la barre longitudinale 30, le serrage de la vis 80 permet de rapprocher le second bec 55 du bord inférieur 32 de la barre longitudinale 30 assurant l'introduction de la partie extrême recourbée 56 du second bec 55 à l'intérieur du lamage 34 de la barre longitudinale 30.

A l'inverse, le desserrage de la vis 80 entraine la désolidarisation du second bec 55 de la barre longitudinale 30 et donc le retrait de la partie recourbée 56 du lamage 34.

A titre de variante, et en considérant que l'angle de pivot peut être minimal, voire supprimé, on peut remplacer la liaison pivot par une simple liaison en translation verticale selon Z. Dans cette variante, non représentée, la mâchoire mobile 54 définit alors un mors mobile comme celui d'un étau, l'écrou étant alors un simple trou taraudé à l'intérieur du mors. Le point d'appui n'est alors plus nécessaire.

Le procédé d'assemblage d'une barre de toit 40 sur une barre longitudinale 30 mettant en oeuvre le dispositif d'ancrage 50 selon l'invention consiste de manière simple :
- à amener en butée, le bec 53 de la partie de mâchoire fixe 52 contre les bords intérieur 31 et supérieur 33 de la barre longitudinale 30 ; en ayant préalablement desserré la vis de serrage 80 ;
- à positionner le bec 55 de la partie de mâchoire mobile 54, en regard du lamage 34 du bord inférieur 32 de la barre longitudinale 30 en ayant préalablement interposé l'extrémité de la languette 61 entre le bec 55 de la partie de mâchoire mobile 54 et le bord inférieur 32 de la barre longitudinale 30 ; la partie recourbée 56 traversant l'ouverture 62 de la languette 61 ;
- à effectuer un serrage progressif de la vis 80 par la partie supérieure de la barre de toit 40, au moyen d'un outil de serrage 100 de type clé allène ou Torx ou tournevis, pour introduire progressivement la partie recourbée 56 à l'intérieur du lamage 34 ménagé dans le bord inférieur 32 de la barre longitudinale 30 jusqu'au blocage complet de l'assemblage.

## Revendications

1. Dispositif d'ancrage (50) d'une extrémité de barre de toit (40) sur une barre longitudinale (30) solidarisée à une partie latérale supérieure d'une partie de structure de véhicule (1), sensiblement parallèle à une direction longitudinale de ce dernier, ledit dispositif (50) comportant une mâchoire fixe (52) et une mâchoire mobile (54) disposée en regard de la mâchoire fixe (52) en étant mobile par rapport à la mâchoire fixe (52) pour être apte à enserrer au moins partiellement une section de la barre longitudinale (30), et des moyens de serrage (80) de la mâchoire mobile (54) sur la barre longitudinale (30), le dispositif (50) comportant au moins des premiers moyens d'ancrage (50A) comportant au moins un corps (51) solidarisé à la barre de toit (40) se terminant par un premier bec définissant une surface d'appui (53) de la mâchoire fixe (52) épousant sensiblement la forme de la barre longitudinale (30), ledit corps (51) supportant à déplacement la mâchoire mobile (54) dont une extrémité (55) fait saillie du corps (51) pour venir en regard du premier bec (53), et le dispositif (50) comportant au moins des seconds moyens d'ancrage (50B) comportant des moyens formant butée (34), ménagés sur ou dans la barre longitudinale (30) ; la partie extrême (56) du second bec (55) des premiers moyens d'ancrage (50A) étant conformée pour être apte à coopérer avec ladite butée (34) des seconds moyens d'ancrage (50B) sous l'effet de moyens de serrage (80) couplés mécaniquement à la barre de toit et la mâchoire mobile (54), pour assurer le blocage de la barre de toit (40) sur la barre longitudinale (30), **caractérisé en ce que** le corps (51) supporte à rotation un levier (70) définissant la mâchoire mobile (54) et dont le déplacement se fait à rotation autour d'un point d'appui fixe (73) du corps (51) sous l'effet des moyens de serrage (80).

2. Dispositif (50) selon la revendication précédente, **caractérisé en ce que** les moyens de serrage comportent une vis (80) dont la tête (81) est en butée sur la barre de toit (40) et dont la partie filetée (82) coopère avec un moyen formant écrou (90) couplé en rotation avec le levier (70).

3. Dispositif (50) selon la revendication 1, **caractérisé en ce que** le corps (51) supporte à translation un mors définissant la mâchoire mobile (54) et dont le déplacement se fait à translation dans le corps (51) sous l'effet des moyens de serrage (80).

4. Dispositif (50) selon l'une des revendications précédentes, **caractérisé en ce que** la section transversale de la barre longitudinale (30) est délimitée par un bord intérieur (31) plan, se prolongeant par un bord inférieur (32) adjacent plan, et un bord supérieur (33) partiellement convexe reliant le bord inférieur (32) au bord intérieur (31).

5. Dispositif (50) selon l'une des revendications précédentes, **caractérisé en ce que** la surface d'appui du premier bec est conformée pour être apte à épouser au moins partiellement le bord intérieur (31) et le bord supérieur (33) de la barre longitudinale (30), et **en ce que** le second bec (55) est conformé pour être apte à épouser au moins partiellement le bord inférieur (32) de la barre longitudinale (30) ; la partie extrême (56) du second bec (55) étant recourbée pour être apte à coopérer avec une butée (34) ménagée dans le bord inférieur (32) de la barre longitudinale (30).

6. Dispositif (50) selon la revendication précédente, **caractérisé en ce que** la butée (34) définit un lamage de forme générale rectangulaire dont la grande dimension s'étend suivant la direction longitudinale, centré sur le bord inférieur (32) de la barre longitudinale (30).

7. Barre de toit (40) comportant une ouverture d'accès (43) pour les moyens de serrage (80) du dispositif d'ancrage (50) selon l'une des revendications 1 à 6.

8. Barre longitudinale (30) apte à être solidarisée à une partie latérale supérieure d'une partie de structure de véhicule (1), sensiblement parallèle à une direction longitudinale de ce dernier, comportant une butée (34) conforme à celle des seconds moyens d'ancrage (50B) du dispositif d'ancrage (50) selon l'une des revendications 1 à 6.

9. Corps (51) apte à être solidarisé sur l'extrémité d'une barre de toit (40) selon la revendication 7, ledit corps (51) appartenant aux premiers moyens d'ancrage (50A) du dispositif d'ancrage selon l'une des revendications 1 à 6.

10. Véhicule automobile comportant au moins une paire de barres longitudinales (30) selon la revendication 8, au moins une barre de toit (40) selon la revendication 7 et un dispositif d'ancrage (50) selon l'une des revendications 1 à 6.

11. Procédé d'assemblage d'une barre de toit (40) selon la revendication 7 sur une barre longitudinale (30) selon la revendication 8 mettant en oeuvre le dispositif d'ancrage (50) selon la revendication 6, **caractérisé en ce qu'**il consiste :
- à amener en butée, le premier bec (53) contre un bord intérieur (31) de la barre longitudinale (30) ; le second bec (55) passant sous son bord inférieur (32) ;
- à actionner les moyens de serrage (80) pour amener progressivement le second bec (55) contre le bord inférieur (33) de la barre de toit (30); la partie recourbée (56) du second bec (55) pénétrant progressivement à l'intérieur du lamage (34) ménagé dans le bord inférieur (33) de la barre longitudinale (30) jusqu'au blocage complet de l'assemblage.

## Patentansprüche

1. Vorrichtung zur Verankerung (50) eines Endes eines Dachträgers (40) auf einem Längsträger (30), der fest mit einem oberen Seitenabschnitt eines Fahrzeugstrukturabschnitts (1), in etwa parallel zu einer Längsrichtung von letzterem, verbunden ist, wobei die besagte Vorrichtung (50) eine feststehende Klaue (52) und eine bewegliche Klaue (54) umfasst, die gegenüber der feststehenden Klaue (52) angeordnet ist, und im Verhältnis zur feststehenden Klaue (52) beweglich ist, um imstande zu sein, zumindest teilweise eine Sektion des Längsträgers (30) zu umschließen, sowie Mittel zum Klemmen (80) der beweglichen Klaue (54) auf dem Längsträger (30), wobei die Vorrichtung (50) zumindest erste Mittel zur Verankerung (50A) umfasst, die zumindest einen Korpus (51) umfassen, der fest mit dem Dachträger (40) verbunden ist, der mit einem ersten Schnapper abschließt, der eine Auflagefläche (53) der feststehenden Klaue (52) definiert, die sich in etwa an die Form des Längsträgers (30) anschmiegt, wobei der besagte Korpus (51) die bewegliche Klaue (54) beweglich stützt, von der ein Ende (55) über den Korpus (51) hinausragt, um sich gegenüber dem ersten Schnapper (53) zu positionieren, und die Vorrichtung (50) zumindest zweite Mittel zur Verankerung (50B) umfasst, die Mittel umfassen, die einen Anschlag (34) bilden, auf oder in dem Längsträger (30) angeordnet; wobei der Endabschnitt (56) des zweiten Schnappers (55) der ersten Mittel zur Verankerung (50A) ausgeformt ist, um imstande zu sein, unter der Wirkung von Mitteln zum Klemmen (80), die mechanisch mit dem Dachträger und der beweglichen Klaue (54) verbunden sind, mit dem besagten Anschlag (34) der zweiten Mittel zur Verankerung (50B) zusammenzuwirken, um für die Feststellung des Dachträgers (40) auf dem Längsträger (30) zu sorgen, **dadurch gekennzeichnet, dass** der Korpus (51) einen Hebel (70) drehend stützt, der die bewegliche Klaue (54) definiert, und dessen Fortbewegung um einen feststehenden Auflagepunkt (73) des Korpus (51) drehend unter der Wirkung von Mitteln zum Klemmen (80) erfolgt.

2. Vorrichtung (50) nach dem vorstehenden Anspruch, **dadurch gekennzeichnet, dass** die Mittel zum Klemmen eine Schraube (80) umfassen, deren Kopf (81) auf Anschlag am Dachträger (40) steht, und deren Gewindeabschnitt (82) mit einem Mittel zusammenwirkt, das eine Mutter (90) bildet, die drehend mit dem Hebel (70) verbunden ist.

3. Vorrichtung (50) nach Anspruch 1, **dadurch gekennzeichnet, dass** der Korpus (51) im Vorschub eine Backe stützt, die die bewegliche Klaue (54) definiert, und deren Verschiebung in Vorschubrichtung in den Korpus (51) unter der Wirkung der Mittel zum Klemmen (80) erfolgt.

4. Vorrichtung (50) nach einem der vorstehenden Ansprüche, **dadurch gekennzeichnet, dass** der Querschnitt des Längsträgers (30) durch einen ebenen inneren Rand (31) eingegrenzt ist, der sich in einem angrenzenden ebenen unteren Rand (32) und einem teilweise konvexen oberen Rand (33) fortsetzt, der den unteren Rand (32) mit dem inneren Rand (31) verbindet.

5. Vorrichtung (50) nach einem der vorstehenden Ansprüche, **dadurch gekennzeichnet, dass** die Auflagefläche des ersten Schnappers ausgeformt ist, um imstande zu sein, sich zumindest teilweise an den inneren Rand (31) und den oberen Rand (33) des Längsträgers (30) anzuschmiegen, und dadurch, dass der zweite Schnapper (55) ausgeformt ist, um imstande zu sein, sich zumindest teilweise an den unteren Rand (32) des Längsträgers (30) anzuschmiegen; wobei der Endabschnitt (56) des zweiten Schnappers (55) umgebogen ist, um imstande zu sein, mit einem Anschlag (34) zusammenzuwirken, der am unteren Rand (32) des Längsträgers (30) angeordnet ist.

6. Vorrichtung (50) nach dem vorstehenden Anspruch, **dadurch gekennzeichnet, dass** der Anschlag (34) eine Senkung in einer im Allgemeinen rechteckigen Form definiert, deren große Abmessung sich mittig am unteren Rand (32) des Längsträgers (30) entlang der Längsrichtung erstreckt.

7. Dachträger (40), eine Zugriffsöffnung (43) für die Mittel zum Klemmen (80) der Vorrichtung zur Verankerung (50) nach einem der Ansprüche 1 bis 6 umfassend.

8. Längsträger (30), der imstande ist, fest mit einem oberen Seitenabschnitt eines Fahrzeugstrukturabschnitts (1) verbunden zu werden, in etwa parallel zu einer Längsrichtung von letzterem, einen Anschlag (34) mit einer Form entsprechend jener der zweiten Mittel zur Verankerung (50B) der Vorrichtung zur Verankerung (50) nach einem der Ansprüche 1 bis 6 umfassend.

9. Korpus (51), der imstande ist, fest auf dem Ende eines Dachträgers (40) nach Anspruch 7 befestigt zu werden, wobei der besagte Korpus (51) den ersten Mitteln zur Verankerung (50A) der Vorrichtung zur Verankerung nach einem der Ansprüche 1 bis 6 angehört.

10. Kraftfahrzeug, zumindest ein Paar an Längsträgern (30) nach Anspruch 8 umfassend, zumindest einen Dachträger (40) nach Anspruch 7, und eine Vorrichtung zur Verankerung (50) nach einem der Ansprüche 1 bis 6.

11. Verfahren zur Montage eines Dachträgers (40) nach Anspruch 7 auf einem Längsträger (30) nach Anspruch 8 unter Verwendung der Vorrichtung zur Verankerung (50) nach Anspruch 6, **dadurch gekennzeichnet, dass** es darin besteht:
- den ersten Schnapper (53) auf Anschlag an einen inneren Rand (31) des Längsträgers (30) zu bringen; wobei der zweite Schnapper (55) unter seinem unteren Rand (32) verläuft;
- die Mittel zum Klemmen (80) zu betätigen, um den zweiten Schnapper (55) nach und nach an den unteren Rand (33) des Dachträgers (30) heranzuführen; wobei der umgebogene Abschnitt (56) des zweiten Schnappers (55) bis zum vollständigen Feststellen der Montage nach und nach ins Innere der Senkung (34), die am unteren Rand (33) des Längsträgers (30) angeordnet ist, eindringt.

## Claims

1. Device (50) for anchoring an end of a roof bar (40) on a longitudinal bar (30) secured to a top lateral part of a structural part of a vehicle (1), substantially parallel to a longitudinal direction thereof, said device (50) comprising a fixed jaw (52) and a movable jaw (54) disposed opposite the fixed jaw (52) while being movable with respect to the fixed jaw (52) in order to be able to at least partially grip a section of the longitudinal bar (30), and means (80) for gripping of the movable jaw (54) on the longitudinal bar (30), the device (50) comprising at least first anchoring means (50A) comprising at least one body (51) secured to the roof bar (40) terminating in a first nose defining a support surface (53) of the fixed jaw (52) matching substantially the shape of the longitudinal bar (30), said body (51) movably supporting the movable jaw (54), one end (55) of which projects from the body (51) in order to come opposite the first nose (53), and the device (50) comprising at least second anchoring means (50B) comprising means forming a stop (34), provided on or in the longitudinal bar (30); the end part (56) of the second nose (55) of the first anchoring means (50A) being conformed so as to be able to cooperate with said stop (34) of the second anchoring means (50B) under the effect of gripping means (80) coupled mechanically to the roof bar and the movable jaw (54), in order to lock the roof bar (40) on the longitudinal bar (30), **characterised in that** the body (51) rotatably supports a lever (70) defining the movable jaw (54) and the movement of which takes place rotatably about a bearing point (73) of the body (51) under the effect of the gripping means (80).

2. Device (50) according to the preceding claim, **characterised in that** the gripping means comprise a screw (80), the head (81) of which is in abutment on the roof bar (40) and the threaded part (82) of which cooperates with a means forming a nut (90) coupled rotatably with the lever (70).

3. Device (50) according to claim 1, **characterised in that** the body (51) translatably supports a vice defining the movable jaw (54) and the movement of which takes place translatable in the body (51) under the effect of the gripping means (80).

4. Device (50) according to one of the preceding claims, **characterised in that** the cross section of the longitudinal bar (30) is delimited by a flat interior edge (31), extended by an adjacent flat bottom edge (32), and a partially convex top edge (33) connecting the bottom edge (32) to the interior edge (31).

5. Device (50) according to any of the preceding claims, **characterised in that** the bearing surface of the first nose is conformed so as to be able to at least partially match the interior edge (31) and the top edge (33) of the longitudinal bar (30), and **in that** the second nose (55) is conformed so as to be able to at least partially match the bottom edge (32) of the longitudinal bar (30); the end part (56) of the second nose (55) being curved so as to be able to cooperate with a stop (34) provided in the bottom edge (32) of the longitudinal bar (30).

6. Device (50) according to the preceding claim, **characterised in that** the stop (34) defines a roughly rectangular shaped countersink, the major dimension of which extends in the longitudinal direction, centred on the bottom edge (32) of the longitudinal bar (30).

7. Roof bar (40) comprising an access opening (43) for the gripping means (80) of the anchoring device (50) according to any of claims 1 to 6.

8. Longitudinal bar (30) able to be secured to a top lateral part of a structural part of a vehicle (1), substantially parallel to a longitudinal direction thereof, comprising a stop (34) in accordance with the stop of the second anchoring means (50B) of the anchoring device (50) according to any of claims 1 to 6.

9. Body (51) able to be secured to the end of a roof bar (40) according to claim 7, said body (51) belonging to the first anchoring means (50A) of the anchoring device according to any of claims 1 to 6.

10. Motor vehicle comprising at least one pair of longitudinal bars (30) according to claim 8, at least one roof bar (40) according claim 8, at least one roof bar (40) according to claim 7 and an anchoring device (50) according to any of claims 1 to 6.

11. Method for assembling a roof bar (40) according to claim 7 on a longitudinal bar (30) according to claim 8 using the anchoring device (50) according to claim 6, **characterised in that** it consists of:
- bringing the first nose (53) into abutment against an interior edge (31) of the longitudinal bar (30); the second nose (55) passing under its bottom edge (32);
- actuating the gripping means (80) in order to gradually bring the second nose (55) against the bottom edge (33) of the roof bar (30); the curved part (56) of the second nose (55) gradually entering inside the countersink (34) provided in the bottom edge (33) of the longitudinal bar (30) until the assembly is completely locked.
